# EUROPÄISCHE PATENTSCHRIFT

(11) **EP 1 870 279 B1**
(45) Veröffentlichungstag und Bekanntmachung des Hinweises auf die Patenterteilung: **10.08.2011**
(21) Anmeldenummer: 07011409.5
(22) Anmeldetag: 11.06.2007
(51) Int. Cl.: B60N 2/28

(54) **Kindersitz**
Child car seat
Siège enfant

(30) Priorität: 13.06.2006 DE 102006027418; 23.08.2006 DE 102006039486
(43) Veröffentlichungstag der Anmeldung: 26.12.2007
(73) Patentinhaber: Emmaljunga Barnvagnsfabrik AB, 28022 Vittsjö (SE)
(72) Erfinder:
(74) Vertreter: Bauer, Clemens

(56) Entgegenhaltungen:
- EP-A- 0 931 692
- EP-A- 1 006 017
- EP-A- 1 433 653
- ES-U- 1 062 081

## Beschreibung

Die vorliegende Erfindung bezieht sich auf einen Sitz, der insbesondere als Kindersitz ausgebildet ist.

Sitze der in Frage stehenden Art sind hinlänglich aus dem Stand der Technik bekannt. Derartige Sitze weisen in der Regel eine Sitzschale auf, in welcher das Sitzpolster integriert ist. Das Sitzpolster weist im wesentlichen einen Bein-, Gesäß-, Rücken- und Kopfbereich auf.

Nachteilig bei derartigen Sitzen ist jedoch, daß diese nicht in ihrer Größe einstellbar sind. So ist es nicht möglich, den Kindersitz in seiner Form des Sitzbereichs der Sitzschale bzw. seinen geometrischen Abmessungen entsprechend an ein wachsendes Kind anzupassen. Dies ist jedoch insbesondere im Falle eines Verkehrsunfalls besonders wichtig, da nur durch einen optimal angepaßten Kindersitz eine optimale Schutzwirkung erzielt werden kann. So ist es Ziel, den Körperschwerpunkt der in dem Sitz befindlichen Person möglichst tief im Sitz zu positionieren, so dass bei einer größeren Person Bein- und Rückenbereich stärker zueinander geneigt sind (und somit der Gesäßbereich tiefer im Sitz angeordnet ist) als bei einer kleineren Person.

Die gattungsbildende ES 1 062 081 U zeigt einen Kindersitz mit einem Trägerelement und einer Kopfstützeinheit, welche verschiebbar an dem Trägerelement angeordnet ist, sowie eine Hubeinheit, welche mit der Kopfstützeinheit koppelbar ist, so dass bei einer Bewegung der Kopfstützeinheit die Hubeinheit von dem Trägerelement beabstandet wird.

Die EP 1 006 017 A offenbart einen Kindersitz für ein Kraftfahrzeug mit einem Sitzkörper, der einen Rückenabschnitt und einen Sitzabschnitt sowie eine obere Rückenstütze aufweist, welche zur Bewegung in eine Richtung zum und weg vom Sitzabschnitt auf dem Rückenabschnitt montiert ist, wobei eine Steuereinrichtung zur Variierung der Position der oberen Rückenstütze relativ zu dem Rückenabschnitt vorgesehen ist.

Es ist somit Aufgabe der vorliegenden Erfindung, einen Sitz, insbesondere Kindersitz, vorzusehen, der an sich ändernde Größenverhältnisse der darin Platz nehmenden Person anpaßbar ist.

Diese Aufgabe wird durch einen Sitz, insbesondere Kindersitz, mit den Merkmalen des Anspruchs 1 gelöst. Bevorzugte Ausführungsformen sind Gegenstand der abhängigen Unteransprüche.

Erfindungsgemäß ist ein Sitz, insbesondere Kindersitz, vorgesehen, umfassend ein Trägerelement, eine Kopfstützeinheit, welche verschiebbar an dem Trägerelement angeordnet und zwischen einer ersten und einer zweiten Position bewegbar ist, sowie eine Hubeinheit, welche derart mit der Kopfstützeinheit gekoppelt ist, dass ein Hubbereich der Hubeinheit bei einer Verschiebung der Kopfstützeinheit in Richtung von der ersten zur zweiten Position von dem Trägerelement beabstandet wird.

Das Trägerelement ist hierbei insbesondere in Form einer Schale ausgebildet und weist einen Beinbereich zur Aufnahme der Beine der Person, einen Rückenbereich zur Aufnahme des Rückens der Person und einen Gesäßbereich zur Aufnahme des Gesäßbereichs der Person auf. Ferner ist das Trägerelement ausgebildet, ein Sitzpolster bzw. eine Polsterung bzw. Polstereinheit aufzunehmen, die entsprechend ebenfalls einen Beinbereich, einen Gesäßbereich sowie einen Rückenbereich aufweist. Die Polstereinheit ist vorteilhafterweise flexibel ausgebildet. Ferner ist eine Kopfstützeinheit vorgesehen, die an dem Trägerelement verschiebbar angeordnet ist. Die Kopfstützeinheit läßt sich hierbei insbesondere im wesentlichen parallel zur Rückenfläche des Trägerelements verschieben. Die Kopfstützeinheit ist hierbei zwischen einer ersten und einer zweiten Position mit Bezug auf das Trägerelement bewegbar. In der zweiten Position ist die Kopfstützeinheit sehr viel näher am Gesäßbereich des Trägerelements angeordnet als in der ersten Position. In anderen Worten ragt die Kopfstützeinheit in der ersten Position zumindest bereichsweise vorteilhafterweise über das Trägerelement hervor. Schließlich ist eine Hubeinheit vorgesehen, die derart mit der Kopfstützeinheit gekoppelt ist, daß ein Hubbereich der Hubeinheit bei einer Verschiebung der Kopfstützeinheit in Richtung von der ersten zur zweiten Position von dem Trägerelement beabstandet wird. Die Hubeinheit kann mittelbar oder unmittelbar mit der Kopfstützeinheit gekoppelt sein. Der Hubbereich der Hubeinheit ist im wesentlichen korrespondierend zu einem Gesäßbereich des Trägerelements angeordnet. Bei einer Verschiebung der Kopfstützeinheit in Richtung von der ersten zur zweiten Position wird der Hubbereich der Hubeinheit von dem Gesäßbereich des Trägerelements beabstandet bzw. entfernt sich von diesem. Die Hubeinheit ist vorteilhafterweise mit Bezug auf das Trägerelement derart angeordnet, daß diese einem Sitzbereich zugewandt ist, d.h. daß die Hubeinheit im wesentlichen zwischen dem Trägerelement und einer in dem Sitz Platz nehmenden Person angeordnet ist. Durch eine Verschiebung der Kopfstützeinheit in Richtung zur zweiten Position wird somit aufgrund der Beabstandung der Hubeinheit von dem Trägerelement zumindest der Gesäßbereich der in dem Sitz befindlichen Person von dem Trägerelement derart beabstandet, daß die Liegekurve der in dem Sitz befindlichen Person flacher gestaltet wird. In anderen Worten wirkt die Hubeinheit somit als Liegekurvenverstellelement. Somit ist es vorteilhafterweise möglich, die Liegekurve des erfindungsgemäßen Sitzes der in dem Sitz befindlichen Person anzupassen. Hierdurch wird die Sicherheit im Falle eines Unfalls deutlich verbessert, da der Körperschwerpunkt der in dem Sitz befindlichen Person möglichst tief im Sitz positionierbar ist, so dass bei einer größeren Person Bein- und Rückenbereich stärker zueinander geneigt sind (und somit der Gesäßbereich tiefer im Sitz angeordnet ist) als bei einer kleineren Person.

Erfindungsgemäß ist die Hubeinheit in einem ersten Bereich an dem Trägerelement und in einem zweiten Bereich an der Kopfstützeinheit befestigt. Die Hubeinheit ist vorteilhafterweise im wesentlichen plattenförmig ausgebildet, deren erstes bzw. distales Ende an dem Trägerelement starr fixiert ist. In anderen Worten ist eine Relativbewegung des ersten Bereichs bzw. Endes der Hubeinheit in Bezug auf das Trägerelement nicht möglich. Die Hubeinheit ist vorteilhafterweise flexibel ausgebildet, beispielsweise aus Polypropylen. Der zweite Bereich bzw. das zweite Ende der Hubeinheit ist mittelbar oder unmittelbar mit der Kopfstützeinheit gekoppelt. Infolgedessen folgt das zweite Ende bzw. der zweite Bereich der Hubeinheit zumindest bereichsweise im wesentlichen einer Bewegung der Kopfstützeinheit. Somit resultiert die Verschiebung der Kopfstützeinheit in einer Verschiebung des zweiten Bereichs der Hubeinheit. Verschieberichtung von Kopfstützeinheit und Hubeinheit müssen jedoch nicht in gleicher Richtung erfolgen. Vielmehr erfolgt die Verschiebung der Kopfstützeinheit vorteilhafterweise im wesentlichen parallel zu einer Rückenfläche des Trägerelements, wohingegen die Verschiebung des zweiten Bereichs der Hubeinheit im wesentlichen parallel zu einer Bein- bzw. Kniefläche des Trägerelements erfolgt. Die Hubeinheit erstreckt sich vorteilhafterweise zumindest bereichsweise entlang eines Beinbereichs, eines Gesäßbereichs sowie eines Rückenbereichs des Trägerelements. Somit bildet die Hubeinheit vorteilhafterweise einen Teil der Auflagefläche der Person auf dem Sitz.

Vorteilhafterweise weist die Kopfstützeinheit ein Führungselement auf, über welches die Hubeinheit an der Kopfstützeinheit befestigt bzw. gekoppelt ist. Das Führungselement ist vorteilhafterweise zwischen der Hubeinheit und dem Trägerelement angeordnet und erstreckt sich vorzugsweise von der Kopfstützeinheit ausgehend zumindest zwischen dem ersten Bereich und dem zweiten Bereich der Hubeinheit, d. h. von der Kopfstützeinheit ausgehend über den ersten Bereich hinaus im wesenltichen bis zum zweiten Bereich der Hubeinheit . Ein distales Ende des Führungselements ist vorteilhafterweise mit dem zweiten Bereich der Hubeinheit gekoppelt oder verbunden bzw. steht mit diesem in Eingriff. Das Führungselement erstreckt sich vorteilhafterweise zumindest teilweise entlang des Rückenbereichs, des Gesäßbereichs und des Beinbereichs des Trägerelements. Somit wird die Bewegung der Kopfstützeinheit im wesentlichen parallel zu dem Rückenbereich des Trägerelements in eine Bewegung des zweiten Bereichs der Hubeinheit im wesentlichen parallel zu einem Kniebereich des Trägerelements umgesetzt bzw. transformiert.

Vorzugsweise weist das Trägerelement eine Führung auf, um das Führungselement während der Bewegung zwischen der ersten und zweiten Position zu führen. Diese Führung kann vorteilhafterweise lateral bzw. seitlich in Bezug auf die Bewegungsrichtung des Führungselement vorgesehen sein. Bevorzugterweise erfolgt die Führung des Führungselements in dem Trägerelement jedoch insbesondere in einer Richtung, welche im wesentlichen der Beabstandungsrichtung der Hubeinheit entspricht. In anderen Worten ist das Führungselement also vorzugsweise derart geführt, dass sein Abstand zum Trägerelement konstant bleibt und somit nicht in Richtung der Sitzfläche ausweichen kann. Somit wird vorteilhafterweise verhindert, daß das Führungselement wie die Hubeinheit von dem Trägerelement beabstandet wird. Es wird also sichergestellt, daß lediglich der Hubbereich der Hubeinheit von dem Trägerelement bei einer Bewegung der Kopfstützeinheit in Richtung der zweiten Position beabstandet wird.

Wird somit die Kopfstütze in Richtung der zweiten Position verschoben, wird der zweite Bereich der Hubeinheit mittels des Führungselements derart verschoben, daß sich der Hubbereich der Hubeinheit von dem Trägerelement beabstandet. Infolgedessen wird eine nahezu stufenlose Anpassung an die Größe der Person und damit eine optimale Sitzposition gewährleistet.

Der zweite Bereich der Hubeinheit ist vorteilhafterweise an dem Trägerelement über eine Führung derart befestigt, daß dieser an dem Trägerelement verschiebbar, vorzugsweise im wesentlichen parallel zu einem Beinbereich des Trägerelements, angeordnet ist.

Bevorzugterweise ist das Führungselement zwischen Trägerelement und Hubeinheit angeordnet. Von einem Sitzbereich aus gesehen ist der Sitz somit vorteilhafterweise derart aufgebaut, daß unter dem Sitzpolster die Hubeinheit angeordnet ist, unter der Hubeinheit das Führungselement und hierunter das (schalenförmige) Trägerelement, welches vorgenannte Elemente vorteilhafterweise umschließt.

Weiterhin bevorzugt ist das Führungselement derart an der Kopfstützeinheit festgelegt, daß das Führungselement bei einer Verschiebung der Kopfstützeinheit in Richtung von der zweiten zur ersten Position über die erste Position hinaus in seiner Position bzw. Lage verbleibt, so daß die Beabstandung der Hubeinheit von dem Trägerelement im wesentlichen konstant bleibt. Der Abstand der Kopfstützeinheit vom Gesäßbereich des Trägerelements ist entsprechend kleiner in der ersten Position der Kopfstützeinheit als in einer Position, in welcher die Kopfstützeinheit über die erste Position hinaus verschoben wurde. In anderen Worten ist der Hubbereich bei einer Verschiebung der Kopfstützeinheit von der zweiten bis zur ersten Position in seinem Abstand zum Trägerelement veränderbar, wohingegen eine weitere Verschiebung der Kopfstützeinheit über die erste Position hinaus eine Änderung des Abstands des Hubelements von dem Trägerelement nicht mehr bewirkt. Somit ist das Führungselement von der Kopfstützeinheit bei einer Bewegung über die erste Position hinausgehend von der Kopfstützeinheit entkoppelt. Infolgedessen wird ein Sitz bereitgestellt, dessen Kopfstützeinheit mit der Person über einen Punkt hinauswachsen kann, in welchem der Abstand des Hubelements von dem Trägerelement konstant bleibt, da das Hubelement bereits maximal abgesenkt ist.

Vorteilhafterweise ist das Trägerelement als Schale bzw. Sitzschale ausgebildet, wobei die Polsterung in der geometrischen Konfiguration im wesentlichen der des Trägerelements entspricht.

Vorzugsweise ist die Kopfstützeinheit zumindest in einer ersten und zweiten Position mit dem Trägerelement verrastbar. Es versteht sich, daß die Kopfstützeinheit besonders vorteilhafterweise auch in Positionen zwischen der ersten Position und der zweiten Position mit dem Trägerelement verrastbar ist, um eine Vielzahl von Liegekurven-Konfigurationen einzustellen.

Weiterhin erfindungsgemäß kann eine Sitzvorrichtung bzw. Sitz, insbesondere Kindersitzvorrichtung bzw. -sitz, vorgesehen sein, umfassend ein Trägerelement und eine Kopfstützeinheit, wobei das Trägerelement im wesentlichen als Schale ausgebildet ist, deren Breite durch Seitenwände bestimmt ist, wobei die Kopfstützeinheit zumindest zwei Seitenwandelemente aufweist, um den Kopf einer Person bei einer seitlichen Bewegung des Sitzes (d. h. einer im wesentlichen zu den Seitenwänden senkrechten Bewegungsrichtung) zu führen, und wobei die Seitenwandelemente in Sitzbreitenrichtung gesehen innerhalb der Seitenwände des Sitzes angeordnet sind. In anderen Worten ist der Abstand der Seitenwandelemente der Kopfstützeinheit vorteilhafterweise geringer als der Abstand der Seitenwände des Trägerelements. Vorzugsweise weist die Kopfstützeinheit einen Querschnitt in Form eines U's auf, welches durch die zwei Seitenwandelemente und einen Boden- bzw. Basisabschnitt definiert ist. Vorteilhafterweise ist der Abstand zwischen der Seitenwand des Trägerelements und einem hierzu benachbarten Seitenwandelement der Kopfstützeinheit in Sitzbreitenrichtung gesehen größer als 5 mm, besonders bevorzugt größer als 10 mm. VVeiterhin vorteilhafterweise weist die Kopfstützeinheit einen Boden- bzw. Basisabschnitt auf, über welchen die Kopfstützeinheit mit einem Bodenbereich des Trägerelements vorzugsweise verschieblich gekoppelt ist. Die Kopfstützeinheit ist somit vorzugsweise lediglich über deren Boden- bzw. Basisabschnitt mit dem Trägerelement über deren Bodenbereich vorzugsweise verschieblich gekoppelt bzw. befestigt bzw. angeordnet. Die Seitenwände des Trägerelements und die Seitenwandelemente der Kopfstützeinheit stehen somit nicht direkt miteinander in Verbindung, so dass ein Aufprall bzw. eine äußere Krafteinwirkung auf die Seitenwände des Trägerelements nicht direkt auf die Seitenwandelemente der Kopfstützeinheit übertragen werden, sondern mittelbar über die Befestigung am Bodenbereich des Trägerelements. Infolgedessen können Beschleunigungsspitzen des Kopfbereichs bei einem Seitenaufprall bzw. Kontakt mit den Seitenwänden des Trägerelements vermieden werden.

Es versteht sich, dass sämtliche weiteren Merkmale und Vorteile des eingangs erwähnten Sitzes ebenfalls in dieser Sitzvorrichtung Anwendung finden können.

Weitere Vorteile und Merkmale der vorliegenden Erfindung werden im folgenden anhand lediglich Ausführungsbeispiele darstellender Zeichnungen näher erläutert. Es zeigt:
- **Fig. 1**: eine Seitenansicht einer Ausführungsform des erfindungsgemäßen Sitzes in der ersten Position.
- **Fig. 2**: eine teilweise aufgeschnittene Perpektivansicht einer Ausführungsform des erfindungsgemäßen Sitzes in der ersten Position.
- **Fig. 3**: eine Seitenansicht einer Ausführungsform des erfindungsgemäßen Sitzes in der zweiten Position.
- **Fig. 4**: eine teilweise aufgeschnittene Perpektivansicht einer Ausführungsform des erfindungsgemäßen Sitzes in der zweiten Position.

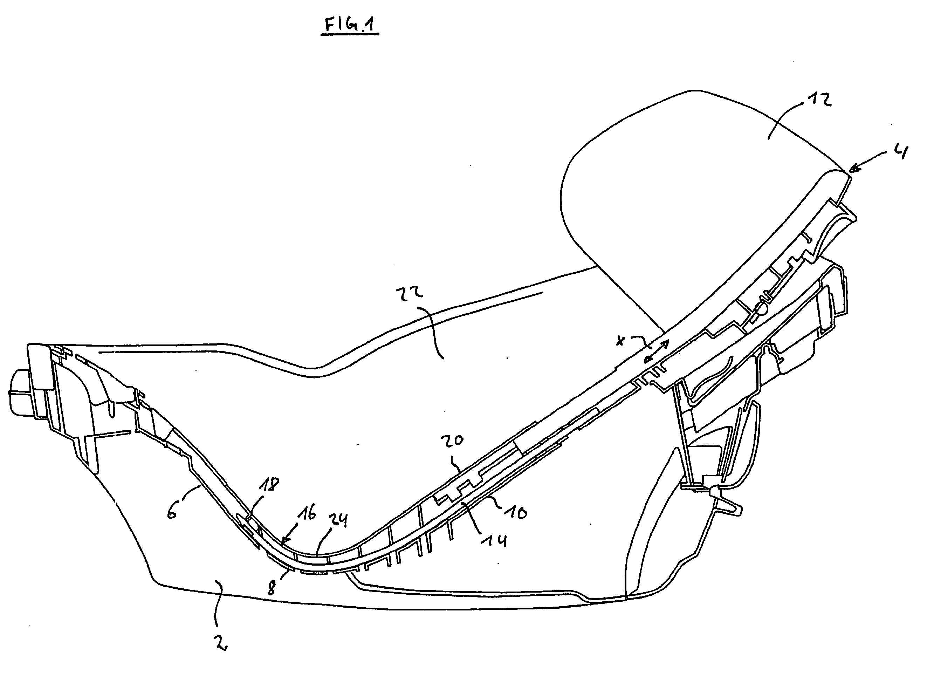

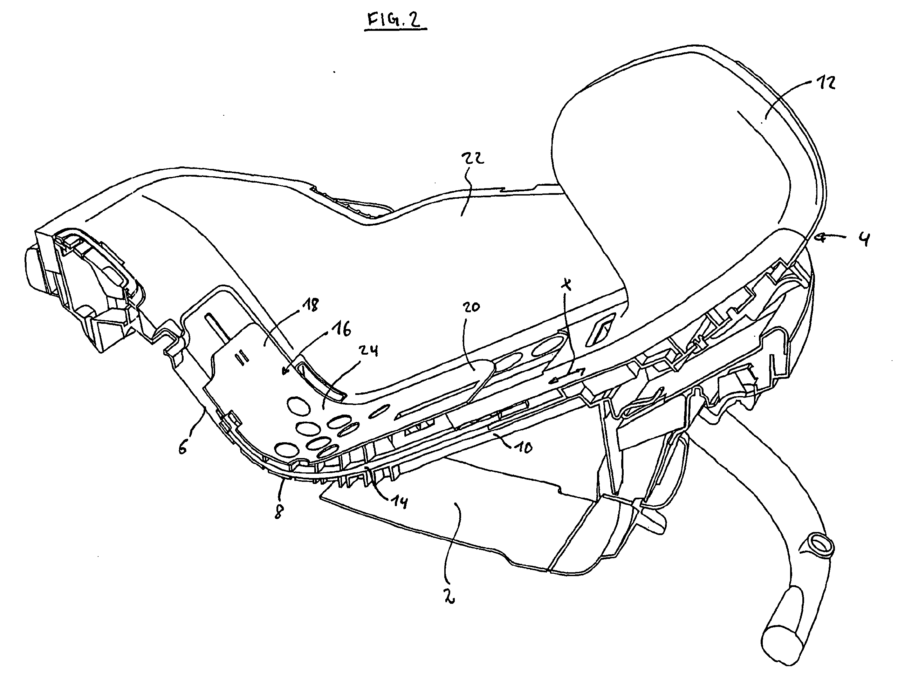

Die in **Fig. 1** und **2** dargestellte Ausführungsform des erfindungsgemäßen Sitzes umfaßt ein Trägerelement 2, welches im wesentlichen als Sitzschale ausgebildet ist. Das Trägerelement 2 ist vorteilhafterweise als Spritzgußteil ausgebildet, welches vorzugsweise zumindest teilweise aus Polypropylen gebildet ist. Ferner umfaßt der Sitz eine Kopfstützeinheit 4, die entlang einer Führung des Trägerelements 2 an dem Trägerelement 2 verschiebbar angeordnet ist. Das Trägerelement 2 weist einen Beinbereich 6, einen Gesäßbereich 8 sowie einen Rückenbereich 10 auf. Die Kopfstützeinheit 4 ist vorteilhafterweise im wesentlichen entlang des Rückenbereichs 10 verschiebbar an dem Trägerelement 2 angeordnet. Ferner weist die Kopfstützeinheit 4 ein Kopfstützpolster 12 auf, welches vorteilhafterweise aus EPS gefertigt ist. Schließlich ist mittelbar oder unmittelbar mit der Kopfstützeinheit 4 ein Führungselement 14 verbunden, welches sich entlang des Rückenbereichs 10 , Gesäßbereichs 8 sowie zumindest teilweise des Beinbereichs 6 des Trägerelements 2 erstreckt. Das Führungselement 14 ist mit einer Hubeinheit 16 gekoppelt. Insbesondere ist das der Kopfstützeinheit 4 gegenüberliegende distale Ende des Führungselements 14 an einem zweiten Bereich 18 der Hubeinheit befestigt bzw. steht mit diesem in Eingriff. Der zweite Bereich 18 der Hubeinheit 16 ist vorteilhafterweise derart zumindest teilweise am Beinbereich 6 des Trägerelements 2 geführt, daß dieser entlang des Beinbereichs 6 verschiebbar ist. Dem zweiten Bereich 18 im wesentlichen gegenüberliegend weist die Hubeinheit einen ersten Bereich 20 auf, der am Rückenbereich 10 des Trägerelements befestigt bzw. fixiert ist. Somit erstreckt sich die Hubeinheit 16 im wesentlichen entlang des Beinbereichs 6, des Gesäßbereichs 8 und des Rückbereichs 10 des Trägerelements 2 und bildet somit einen Teil der Sitzfläche aus. Schließlich kann noch eine Polsterung 22 vorgesehen werden, welche zwischen der in dem Sitz Platz nehmenden Person und der oben beschriebenen Einheit angeordnet ist.

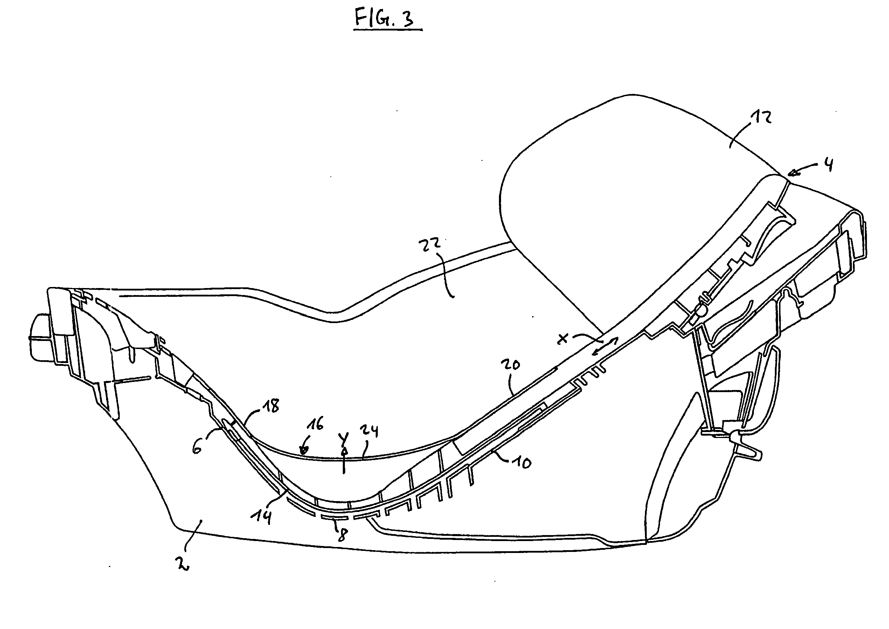

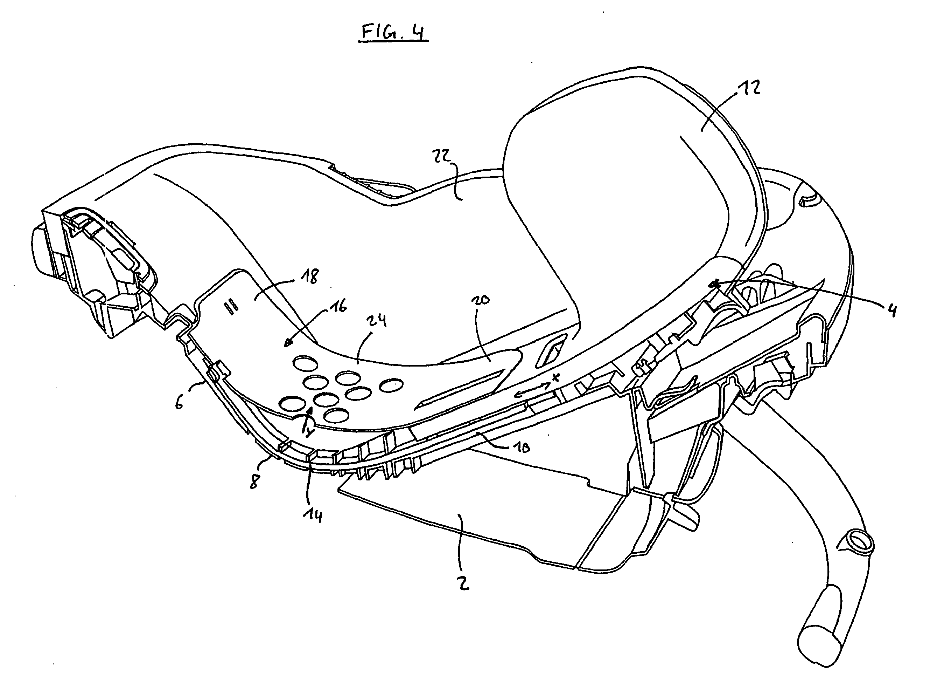

Durch eine Bewegung der Kopfstützeinheit 4 entlang der Richtung X, d.h. im wesentlichen parallel zum Rückenbereich 10 des Trägerelements 2, von der ersten Position, in welcher die Kopfstützeinheit 4 im wesentlichen ausgefahren ist (Fig 1, 2), in eine in Figs. 3 und 4 dargestellte zweite Position wird bezweckt, daß sich das Führungselement 14 der Bewegung der Kopfstützeinheit 4 folgend entsprechend ebenfalls verschiebt. Das Führungselement 14 wird hierbei derart verschoben, daß der distale, vom Trägerelement 2 entkoppelte Endbereich des Führungselements 14 entlang des Beinbereichs 6 des Trägerelements 2 zu einem der Kopfstützeinheit 4 im wesentlichen gegenüberliegenden Endbereich des Trägerelements 2 hin verschoben wird. Infolgedessen wird ein Hubbereich 24 von dem Trägerelement 2, insbesondere dessen Gesäßbereich 8, beabstandet (vgi. Richtung Y). In anderen Worten wird also der Bereich des Sitzes, an welchem das Gesäß der Person angeordnet ist, angehoben, so daß die Liegekurve verändert, insbesondere flacher eingestellt wird. Hierdurch wird die Sicherheit einer Person im Falle eines Unfalls deutlich verbessert, da der Körperschwerpunkt der in dem Sitz befindlichen Person möglichst tief im Sitz positionierbar ist, so dass bei einer größeren Person Bein- und Rückenbereich stärker zueinander geneigt sind (und somit der Gesäßbereich tiefer im Sitz angeordnet ist) als bei einer kleineren Person.

### Bezugszeichenliste

- 2: Trägerelement
- 4: Kopfstützeinheit
- 6: Beinbereich
- 8: Gesäßbereich
- 10: Rückenbereich
- 12: Kopfstützpolster
- 14: Führungselement
- 16: Hubeinheit
- 18: zweiter Bereich
- 20: erster Bereich
- 22: Sitzpolster
- 24: Hubbereich

## Patentansprüche

1. Sitz, insbesondere Kindersitz, umfassend
ein Trägerelement (2),
eine Kopfstützeinheit (4), welche verschiebbar an dem Trägerelement (2) angeordnet und zwischen einer ersten und einer zweiten Position bewegbar ist, und
eine Hubeinheit (16), welche derart mit der Kopfstützeinheit (4) gekoppelt ist, dass ein Hubbereich (24) der Hubeinheit bei einer Verschiebung der Kopfstützeinheit (4) in Richtung von der ersten zur zweiten Position von dem Trägerelement (2) beabstandet wird,
wobei die Hubeinheit (16) in einem ersten Bereich (20) an einem Rückenbereich (10) des Trägerelements (2) befestigt ist, **dadurch gekennzeichnet dass** die Hubeinheit (16) in einem zweiten Bereich (18) mit der Kopfstützeinheit (4) gekoppelt ist, welcher an einem Beinbereich (6) des Trägerelements (2) derart geführt ist, dass der zweite Bereich (18) entlang des Beinbereichs (6) verschiebbar ist.

2. Sitz nach Anspruch 1, wobei die Kopfstützeinheit (4) ein Führungselement (14) aufweist, über welches die Hubeinheit (16) an der Kopfstützeinheit (4) befestigt ist.

3. Sitz nach Anspruch 2, wobei das Trägerelement (2) eine Führung aufweist, um das Führungselement (14) während der Bewegung zwischen der ersten und zweiten Position zu führen.

4. Sitz nach Anspruch 3, wobei das Führungselement (14) zwischen Trägerelement (2) und Hubeinheit (16) angeordnet ist.

5. Sitz nach einem der Ansprüche 2 - 4, wobei das Führungselement (14) derart an der Kopfstützeinheit (4) festgelegt ist, dass das Führungselement (14) bei einer Verschiebung der Kopfstützeinheit (4) in Richtung von der zweiten zur ersten Position über die erste Position hinaus in seiner Position verbleibt, so dass der Abstand der Hubeinheit (16) von dem Trägerelement (2) im wesentlichen konstant bleibt.

6. Sitz nach einem der vorhergehenden Ansprüche, wobei das Trägerelement (2) als Schale ausgebildet ist.

7. Sitz nach einem der vorhergehenden Ansprüche, wobei die Kopfstützeinheit (4) zumindest in der ersten und zweiten Position mit dem Trägerelement (2) verrastbar ist.

8. Sitz nach Anspruch 6, wobei die Breite der Schale durch Seitenwände bestimmt ist, die Kopfstützeinheit (4) zumindest zwei Seitenwandelemente aufweist, um den Kopf einer Person bei einer seitlichen Bewegung des kopfes zu führen, und wobei die Seitenwandelemente in Sitzbreitenrichtung gesehen innerhalb der Seitenwände der Schale angeordnet sind.

9. Sitz nach einem der vorhergehenden Ansprüche, wobei die Kopfstützeinheit (4) einen Basisabschnitt aufweist, über welchen die Kopfstützeinheit (4) mit einem Bodenbereich des Trägerelements (2) verschieblich gekoppelt ist.

## Claims

1. Seat, in particular child seat, comprising
a supporting element (2),
a head supporting unit (4), which is displaceably arranged at the supporting element (2) und displaceable between a first and a second position, and
a lifting unit (16), which is operably coupled with the head supporting unit (4) in such a way that a lifting portion (24) of the lifting unit is being spaced apart from the supporting element (2) upon a displacement of the head supporting unit (4) in direction from the first to the second position,
wherein the lifting unit (16) is mounted in a first portion (20) to a back portion (10) of the supporting element (2), **characterized in that**
the lifting unit (16) is coupled with the head supporting unit (4) in a second portion (18), which is guided at a leg portion (6) of the supporting element (2) in such a way that the second portion (18) is displaceable along the leg portion (6).

2. Seat according to claim 1, wherein the head supporting unit (4) comprises a guide element (14), by which the lifting unit (16) is mounted to the head supporting unit (4).

3. Seat according to claim 2, wherein the supporting element (2) comprises a guide to guide the guide element (14) during displacement between the first and second position.

4. Seat according to claim 3, wherein the guide element (14) is arranged between the supporting element (2) and the lifting unit (16).

5. Seat according to one of claims 2 - 4, wherein the guide element (14) is fixed to the head supporting unit (4) in such a way that the guide element (14) remains in its position upon a displacement of the head supporting unit (4) in direction from the second to the first position beyond the first position, so that the distance of the lifting unit (16) to the supporting element (2) remains substantially constant.

6. Seat according to one of the preceeding claims, wherein the supporting element (2) is formed as a hull.

7. Seat according to one of the preceeding claims, wherein the head supporting unit (4) is mechanically lockeable with the supporting element (2) at least in the first and second position.

8. Seat according to claim 6, wherein the width of the hull is determined through sidewalls, the head supporting unit (4) comprises at least two side wall elements to guide the head of a person upon a lateral displacement of the head, and wherein the side wall elements are arranged within the sidewalls of the hull seen in the seat width direction.

9. Seat according to one of the preceeding claims, wherein the head supporting unit (4) comprises a base portion, by which the head supporting unit (4) is displaceably coupled with a bottom portion of the supporting element (2).

## Revendications

1. Siège, en particuliers siège pour enfants, comprenant un élément porteur (2),
une unité formant appui-tête (4), laquelle est agencée en translation sur l'élément porteur (2) et déplaçable entre une première et une seconde position, et
une unité de levage (16), laquelle est accouplée avec l'unité formant appui-tête (4) de telle façon que, lors d'une translation de l'unité formant appui-tête (4) en direction de la première vers la seconde position, une zone de levage (24) de l'unité de levage est écartée de l'élément porteur (2),
dans lequel l'unité de levage (16) est fixée dans une première zone (20) à une région dorsale (10) de l'élément porteur (2),
**caractérisé en ce que**
l'unité de levage (16) est accouplée dans une seconde zone (18) avec l'unité formant appui-tête (4), laquelle est guidée sur une zone jambière (6) de l'élément porteur (2) de telle façon que la seconde zone (18) est capable de translation le long de la zone jambière (6).

2. Siège selon la revendication 1, dans lequel l'unité formant appui-tête (4) comprend un élément de guidage (14) via lequel l'unité de levage (16) est fixée sur l'unité formant appui-tête (4).

3. Siège selon la revendication 2, dans lequel l'élément porteur (2) comprend un guidage, afin de guider l'élément de guidage (16) pendant le déplacement entre la première et la seconde position.

4. Siège selon la revendication 3, dans lequel l'élément de guidage (14) est agencé entre l'élément porteur (2) et l'unité de levage (16).

5. Siège selon l'une des revendications 2 à 4, dans lequel l'élément de guidage (14) est immobilisé sur l'unité formant appui-tête (4) de telle façon que, lors d'une translation de l'unité formant appui-tête (4) en direction de la seconde à la première position et au-delà de la première position, l'élément de guidage (14) demeure dans sa position, de sorte que la distance de l'unité de levage (16) depuis l'élément porteur (2) reste sensiblement constante.

6. Siège selon l'une des revendications précédentes, dans lequel l'élément porteur (2) est réalisé sous forme de coque.

7. Siège selon l'une des revendications précédentes, dans lequel l'unité formant appui-tête (4) est susceptible d'être enclenchée avec l'élément porteur (2) au moins dans la première et dans la seconde position.

8. Siège selon la revendication 6, dans lequel la largeur de la coque est déterminée par des parois latérales, l'unité formant appui-tête (4) comprend au moins deux éléments de paroi latérale, afin de guider la tête d'une personne lors d'un mouvement latéral de la tête, et dans lequel les éléments de paroi latérale sont agencés, vus dans la direction de la largeur du siège, à l'intérieur des parois latérales de la coque.

9. Siège selon l'une des revendications précédentes, dans lequel l'unité formant appui-tête (4) comprend une portion de base, via laquelle l'unité formant appui-tête (4) est accouplée en translation avec une zone de fond de l'élément porteur (2).
